# EUROPEAN PATENT APPLICATION

(11) **EP 4 424 725 A1**
(43) Date of publication of application: **04.09.2024**
(21) Application number: 22886069.8
(22) Date of filing: 27.10.2022
(51) Int. Cl.: C08F 210/06, C08F 210/00, C08L 23/00, C08F 4/642

(54) **POLYPROPYLENE MICROSPHERE AND PREPARATION METHOD THEREFOR, 3D PRINTING RAW MATERIAL, AND USE**

(30) Priority: 27.10.2021 CN 202111258205
(71) Applicant: CHINA PETROLEUM & CHEMICAL CORPORATION, Chaoyang District Beijing 100728 (CN); BEIJING RESEARCH INSTITUTE OF CHEMICAL INDUSTRY, CHINA PETROLEUM & CHEMICAL CORPORATION, Chaoyang District Beijing 100013 (CN)
(72) Inventor: LING, Yongtai, Beijing 100013 (CN); LIU, Jianye, Beijing 100013 (CN); ZHOU, Junling, Beijing 100013 (CN); XU, Yaohui, Beijing 100013 (CN); LIU, Tao, Beijing 100013 (CN); ZHANG, Shijun, Beijing 100013 (CN); XIA, Xianzhi, Beijing 100013 (CN); LV, Mingfu, Beijing 100013 (CN); LIU, Yuexiang, Beijing 100013 (CN); ZHANG, Hengyuan, Beijing 100013 (CN); LI, Weili, Beijing 100013 (CN); CHEN, Long, Beijing 100013 (CN); ZHAO, Jin, Beijing 100013 (CN); GAO, Futang, Beijing 100013 (CN); REN, Chunhong, Beijing 100013 (CN); XIE, Jijia, Beijing 100013 (CN); TAN, Yang, Beijing 100013 (CN); YANG, Rui, Beijing 100013 (CN); MA, Changyou, Beijing 100013 (CN)
(74) Representative: Hoffmann Eitle
(86) International application number: PCT/CN2022/127943
(87) International publication number: WO 2023/072194

(57) **Abstract**

The present invention relates to the technical field of polypropylene materials, and provides a polypropylene microsphere and a preparation method therefor, a 3D printing raw material, and a use. The polypropylene microsphere comprises 0.2 wt%-10 wt% of a structural unit derived from ethylene and 90 wt%-99.8 wt% of a structural unit derived from propylene, wherein a melting heat absorption curve of the polypropylene microsphere is obtained by means of a differential scanning calorimeter (DSC), and a half-peak width (Wm) of the melting heat absorption curve of the polypropylene microsphere is 4-10 °C. According to the polypropylene microsphere of the present invention, the crystallization sequence distribution of the polypropylene microsphere is uniform, and when the polypropylene microsphere is used for 3D printing, 3D printing melting is uniform, a product is good in performance, and the polypropylene microsphere has an industrial application prospect.

## Description

### Cross-reference to Related Applications

This application claims the priority of Chinese patent application CN202111258205.6, entitled "Polypropylene Microsphere Synthesized by Polymerization" and filed on October 27, 2021, the entirety of which is incorporated herein by reference.

### Field of the Invention

The present disclosure relates to the technical field of polypropylene materials, and in particular, to a polypropylene microsphere and a preparation method therefor, a 3D printing raw material, and a use.

### Background of the Invention

3D printing, also known as "additive manufacturing", is one of rapid prototyping technologies, and it uses a 3D printer to stack materials, such as metal powder or plastic, together by printing layer by layer according to a digital blueprint until an object is formed finally. This technology can realize the production of products anytime, anywhere and on demand, and is applied in fields of daily necessities such as footwear, construction industry, automotive industry, aerospace, medical treatment, education and the like. This emerging technology is gradually changing human life, and has an optimistic prospect in all walks of life. The magazine TIME ranks 3D printing at the top of its list of "10 fastest-growing industries in the United States". The British magazine Economist believes that 3D printing will promote the third industrial revolution.

Selective laser sintering (SLS) is a rapid prototyping technology that is currently the most widely used and promising technology in additive manufacturing, and has shown a rapid development trend in recent years. SLS technology is a technology in which a computer first scans a three-dimensional entity, and then high-intensity laser is used to irradiate material powder laid on a workbench or parts in advance to selectively melt and sinter the material powder layer by layer, thereby realizing layer-by-layer molding. SLS technology has a high degree of design flexibility, and can produce precise models and prototypes, form parts that have a reliable structure and can be used directly, shorten the production cycle and simplify the process, so that it is particularly suitable for the development of new products.

In theory, a wide range of forming materials can be used for SLS technology, such as polymers, paraffins, metals, ceramics and their composites. However, properties and traits of the forming material are an important factor for the successful sintering of SLS technology, and directly affect the forming speed and precision, the physical and chemical properties and the comprehensive properties of formed parts. At present, polymer powder raw materials that can be directly applied to SLS technology and used to successfully manufacture a molded product with a small dimensional error, a regular surface and low porosity are rarely seen in the market. Therefore, there is an urgent need to develop and improve polymers suitable for SLS technology and the corresponding solid powder raw materials.

In existing technologies, the pulverization method, such as cryogenic pulverization method, is usually used to prepare powder materials suitable for SLS. For example, CN104031319A discloses a polypropylene powder obtained by the cryogenic pulverization method. However, this method requires specific equipments, and moreover particles of the prepared powder raw materials have a rough surface, a non-uniform particle diameter, and an irregular shape, which is not beneficial to the formation of a sintered molded body, and affects the performance of the molded body.

Besides, the precipitation method is also used to prepare polymer powder raw materials, such as polyamide powder. In this method, polyamide is usually dissolved in a suitable solvent and is evenly distributed in the solvent by stirring and then cooled to obtain powder precipitation. For example, CN103374223A discloses a precipitated polymer powder based on AABB-type polyamide, which is obtained by performing reprecipitation on polyamide obtained by polycondensation of diamine and dicarboxylic acid. In the method described in the patent, an alcoholic solvent is used during the reprecipitation process. However, this method requires the usage of a large amount of organic solvent and has low yield and efficiency, and thus does not have environmental and economic advantages.

When the polymer is polypropylene, due to the production characteristics of polypropylene, it is impossible to use general polymer particle preparation methods, such as emulsion polymerization, soap-free emulsion polymerization, microemulsion polymerization, fine emulsion polymerization, suspension polymerization, dispersion polymerization, precipitation polymerization and seed polymerization. Polypropylene can only be pulverized into micron-size powder under the condition of a low temperature based on the low temperature brittleness of the material. However, the pulverization of polyolefin often requires a relatively expensive liquid nitrogen cryogenic treatment, and an obvious disadvantage is that the powder obtained by pulverization has unsatisfying morphology, irregular shape, and poor fluidity. During sintering by using SLS technology, it is required to lay powder of polymer particles layer by layer and then sinter layer by layer, but it is very difficult to lay the powder when particles with an irregular shape and poor fluidity are used and as a result printing gets impossible. The more homogeneous the crystalline composition of the polymer is, the higher the melt flow rate index of the polymer is, which is in favor of uniform melting during printing and is more beneficial to the structural stability of printed parts. Therefore, a polypropylene microsphere with good fluidity and morphology is urgently needed to meet actual demand.

Polypropylene foamed materials have advantages such as low density, high specific strength, good thermal stability, excellent impact resistance, green and environmentally friendly raw materials and process, and easiness to be recycled, and can be used as a functional material for buffering, shock absorption, sound insulation, heat insulation and the like. At present, the common polypropylene foamed materials can be divided into four types based on different processing techniques: autoclaved foam, molded foam, extruded foam and injection-molding foam. In addition to common advantages of polypropylene foamed materials, beads and molded bodies of autoclave expanded polypropylene (EPP) have a most significant advantage of free formability, so that EPP beads can be molded to obtain foamed products with a complex geometric shape and a high-precision three-dimensional size. Molded products of polypropylene foamed particles have good rigidity and better impact resistance than that of polystyrene. Compared with the difficult recovery of polystyrene foam, the polypropylene foam is an environmentally friendly material, has a high thermal deformation temperature, can be applied in some high temperature fields, has good energy absorption characteristics and excellent resistance to pressure and energy absorption performance, and has good recovery stability in size and shape, and products of the polypropylene foam can withstand multiple times of continuous impact and deflection without permanent deformation, have a low density, are easy to recycle and non-toxic, and do not produce toxic substances during combustion. These excellent characteristics enable the polypropylene foam to be widely used, and its application in fields such as packaging, automobile, and construction is continuously expanded. The polypropylene foam is especially suitable for application in high-end fields such as interior and exterior decoration of automotive, cold chain logistics and electronic product packaging.

For EPP beads, in-mold overmolding performance is very important. This requires that polypropylene microparticles with a regular shape (preferably approximately spherical shape) and a relatively small particle diameter should be selected as foaming raw materials. The foamed beads prepared by using relatively regular spherical microparticles are also approximately spherical, so that they are easy to tightly stack in the molding process and are less likely to form relatively large pores. The preparation of polypropylene foamed particles also requires the use of relatively expensive liquid nitrogen cryogenic treatment for pulverization, the obtained powder has unsatisfying morphology, an irregular shape, and poor fluidity, so that it is easy to form bridges when the particles are delivered, resulting in unstable production. Moreover, such pulverized particles often lead to uneven foaming, rough surface, and whitening. At the same expansion rate, the smaller the PP microparticles are, the smaller the formed beads are, which is beneficial to the delivery of EPP beads in the process pipeline of the forming equipment, reduces blockage, and enables the beads to be stacked tightly in the mold cavity. Thus, the bonding effect between beads is better during forming, the amount of steam used is smaller, and the mechanical properties and thermal insulation properties of the products are better. In addition, a small particle diameter is beneficial to the preparation of a thin-walled, structurally complex product, and the surface of the product is smoother.

It is often difficult to prepare particles with a diameter of less than 0.5mm by using conventional stretch pelleting and underwater pelleting, and obtained particles have a relatively high length-diameter ratio. If it is desired to obtain microparticles having an average particle diameter of less than 0.5mm, it is often needed to use relatively expensive liquid nitrogen cryogenic treatment for pulverization, the obtained powder has unsatisfying morphology, an irregular shape, and poor fluidity, so that it is easy to form bridges when the particles are delivered, resulting in unstable production. Moreover, such pulverized particles often lead to uneven foaming, a rough surface, and whitening.

The crystallization distribution of polypropylene prepared by using the ZN catalyst is often relatively dispersed, and the DSC test results show that its half-peak width is relatively great; the crystallization distribution of polypropylene prepared by using the metallocene catalyst is relatively uniform, however, the molecular weight distribution of the latter is narrow, which often makes the processing performance of the obtained product poor, and the molecular weight distribution of the obtained product of the former is relatively wide, which is more beneficial to improving the rigid-tough balance of the resin.

Therefore, it is of great practical significance to develop a method for preparing a polypropylene microsphere which has good fluidity and morphology and can be used for 3D printing and foaming materials.

### Summary of the Invention

In order to solve the technical problems of poor uniformity of crystallization sequence distribution of the polypropylene microsphere and unsatisfying melting uniformity and performance of a product when used for 3D printing in existing technologies, the present invention provides a polypropylene microsphere and a preparation method therefor.

According to a first aspect of the present invention, a polypropylene microsphere is provided, and the polypropylene microsphere comprises 0.2 wt%-10 wt% of a structural unit derived from ethylene and 90 wt%-99.8 wt% of a structural unit derived from propylene, wherein a melting heat absorption curve of the polypropylene microsphere is obtained by means of a differential scanning calorimeter (DSC), and a half-peak width (Wm) of the melting heat absorption curve of the polypropylene microsphere is 4-10 °C.

Optionally, the melting heat absorption curve of the polypropylene microsphere is 5-8 °C.

Optionally, a molecular weight distribution (Mw/Mn) of the polypropylene microsphere is 4-9.

Optionally, a molecular weight distribution of the polypropylene microsphere is 5, 6, 7, 8, or any value between the aforementioned any two values.

Optionally, a bulk density of the polypropylene microsphere is 0.20 g/cm³-0.50 g/cm³, preferably 0.32 g/cm³-0.48 g/cm³.

Optionally, an angle of repose of the polypropylene microsphere is 10°-23°, preferably 13°-20°.

Optionally, an isotactic index of the polypropylene microsphere is 60%-94%, preferably 64%-90%.

Optionally, an ash content of the polypropylene microsphere is 0.005%-0.04%.

Optionally, the ash content of the polypropylene microsphere is 0.01%, 0.015%, 0.02%, 0.025%, 0.03%, 0.035%, or any value between any aforementioned two values.

Optionally, a melt index of the polypropylene microsphere is 3-160 g/10min, preferably 15-100 g/10min.

Optionally, conducting a DSC test, a DSC result satisfies the following feature: λᵢ=(dH/dt)ᵢ₊₁-(dH/dt)i, λᵢ ≮ 0 (i satisfying Tₘ < Tᵢ < T_{fm}), wherein the vertical coordinate indicates heat flow rate dH/dt, and the horizontal ordinate indicates temperature T.

In a melting heat absorption curve obtained from the DSC test, the heat absorption effect is characterized with a raised peak value (the thermal enthalpy increases).

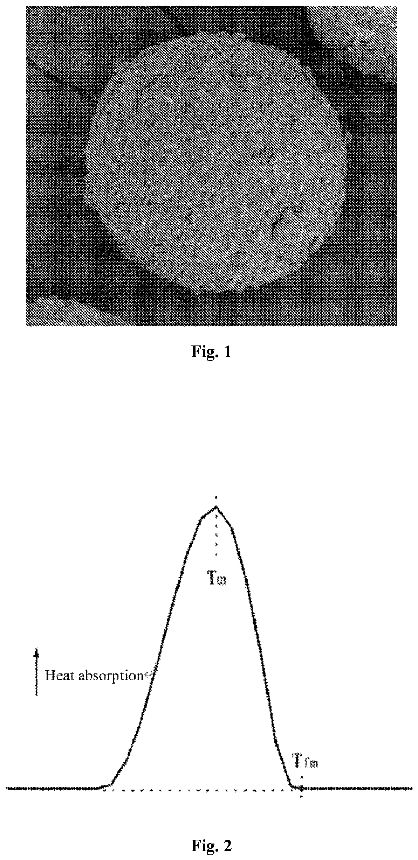

In the DSC test, a Perkin-Elmer DSC-7 differential scanning calorimeter is used. A sample is heated at 10 °C/min to 200 °C, kept at 200 °C for 5 min, then cooled to 50 °C at 10 °C/min and kept at 50 °C for 1 min, and then heated at 10 °C/min to 200 °C again. The schematic diagram of the DSC test is shown in Fig. 2. In the DSC result, the vertical coordinate indicates the heat flow rate dH/dt, and the horizontal ordinate indicates the temperature (T). The heat absorption effect is characterized with the raised peak value (the thermal enthalpy increases), a curve of a second heating is used as a result of heating curve (the curve of the second heating is usually used to eliminate the thermal history of a test sample). As generally indicated, Tₘ indicates a melting point of the test sample, and T_{fm} indicates a temperature at a position where a melting peak is connected with a base line.

During autoclave foaming and molding, the polymeric microsphere having a narrower half-peak width obtained by the present invention can significantly enhance the foaming ratio and the uniformity of EPP beads and be molded under a lower temperature, the energy consumption is reduced when the EPP beads are formed, the production period for forming the EPP beads is accelerated, thereby effectively reducing the production cost of the EPP beads and the molded body. Moreover, the molded body prepared from the EPP beads has better appearance quality, and is especially beneficial to the preparation of an EPP molded body product with a thin wall and a complex shape.

Optionally, an average particle diameter of the polypropylene microsphere is 50 µm to 200 µm; preferably, the average particle diameter of the polypropylene microsphere is 60 µm to 160 µm; and most preferably, the average particle diameter of the polypropylene microsphere is 80 µm to 120 µm.

Optionally, a length-diameter ratio of the polypropylene microsphere is 0.9-1.1; preferably, the length-diameter ratio of the polypropylene microsphere is 0.95-1.05; and most preferably, the length-diameter ratio of the polypropylene microsphere is 1.

As a specific embodiment of the present invention, the polypropylene microsphere is obtained by direct copolymerization.

According to a second aspect of the present invention, a preparation method for the above polypropylene microsphere is provided, comprising: copolymerizing propylene-containing olefins in the presence of an olefin polymerization catalyst system to obtain a polypropylene microsphere.

Optionally, the olefin polymerization catalyst system contains the following components or a reaction product of the following components: a catalyst, an alkyl aluminum compound, and an external electron donor compound that is optionally added or not added.

The alkyl aluminum compound may be various alkyl aluminum compounds that are commonly used as a cocatalyst of the Ziegler-Natta catalyst in the field of olefin polymerization.

Optionally, the alkyl aluminum compound may be, but is not limited to, at least one of trimethylaluminum, triethylaluminum, triisobutylaluminum, trioctylaluminum, diethylaluminum monohydrogen, diisobutylaluminum monohydrogen, diethylaluminum chloride, diisobutylaluminum chloride, ethylaluminum sesquichloride, and ethylaluminum dichloride.

The external electron donor compound may be various external electron donor compounds that are commonly used as a cocatalyst of the Ziegler-Natta catalyst in the field of olefin polymerization.

Optionally, the external electron donor compound may be, but is not limited to, at least one of the group consisting of trimethyl methoxysilane, trimethyl ethoxysilane, trimethyl phenoxyl triethyl methoxysilane, triethyl ethoxysilane, dimethyl dimethoxysilane, dimethyl diethoxysilane, ethyl isopropyl dimethoxysilane, propyl isopropyl dimethoxysilane, diisopropyl dimethoxysilane, diisobutyl dimethoxysilane, isopropyl isobutyl dimethoxysilane, di-tert-butyl dimethoxysilane, tert-butyl methyl dimethoxysilane, tert-butyl ethyl dimethoxysilane, tert-butyl propyl dimethoxysilane, tert-butyl isopropyl dimethoxysilane, tert-butyl butyl dimethoxysilane, tert-butyl isobutyl dimethoxysilane, tert-butyl (sec-butyl) dimethoxysilane, tert-butyl pentyl dimethoxysilane, tert-butyl nonyl dimethoxysilane, tert-butyl hexyl dimethoxysilane, tert-butyl heptyl dimethoxysilane, tert-butyl octyl dimethoxysilane, tert-butyl decyl dimethoxysilane, methyl tert-butyl dimethoxysilane, cyclohexyl methyl dimethoxysilane, cyclohexyl ethyl dimethoxysilane, cyclohexyl propyl dimethoxysilane, cyclohexyl isobutyl dimethoxysilane, dicyclohexyl dimethoxysilane, cyclohexyl tert-butyl dimethoxysilane, cyclopentyl methyl dimethoxysilane, cyclopentyl ethyl dimethoxysilane, cyclopentyl propyl dimethoxysilane, cyclopentyl tert-butyl dimethoxysilane, dicyclopentyl dimethoxysilane, cyclopentyl cyclohexyl dimethoxysilane, bis(2-methyl cyclopentyl) dimethoxysilane, diphenyl dimethoxysilane, diphenyl diethoxysilane, phenyl triethoxysilane, methyl trimethoxysilane, methyl triethoxysilane, ethyl trimethoxysilane , ethyl triethoxysilane, propyl trimethoxysilane, isopropyl trimethoxysilane , butyl trimethoxysilane , butyl triethoxysilane, isobutyl trimethoxysilane, tert-butyl trimethoxysilane, sec-butyl trimethoxysilane, pentyl trimethoxysilane, isopentyl trimethoxysilane, cyclopentyl trimethoxysilane, cyclohexyl trimethoxysilane, diphenyl dimethoxysilane, diphenyl diethoxysilane, phenyl trimethoxysilane, phenyl triethoxysilane, n-propyl trimethoxysilane, ethenyl trimethoxysilane, tetramethoxysilane, tetraethoxysilane, tetrabutoxysilane, 2-ethyl piperidyl-2-tert-butyl dimethoxysilane, (1,1,1-trifluoro-2-propyl)-2-ethyl piperidyl dimethoxysilane, and (1,1,1-trifluoro-2-propyl)-methyl dimethoxysilane. More preferably, the external electron donor compound may be, but is not limited to, at least one of the group consisting of dicyclopentyl dimethoxysilane, diisopropyl dimethoxysilane, diisobutyl dimethoxysilane, cyclohexyl methyl dimethoxysilane, methyl tert-butyl dimethoxysilane, and tetramethoxysilane.

Optionally, the catalyst includes a magnesium-containing compound carrier, a titanium compound, and an internal electron donor compound.

Optionally, a molar ratio of the magnesium-containing compound carrier, the titanium compound, and the internal electron donor compound is (37-255) : (2-15) : 1, preferably (67-235) : (4-12) : 1.

Optionally, the magnesium-containing compound carrier has a structure as shown in formula (I): 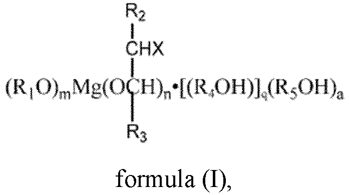 in which, R₁ is a C₁-C₁₀ alkyl;
R₂ and R₃ are same or different, and each independently selected from the group consisting of H, C₁-C₁₀ alkyl, or a halogenated alkyl substituted with 1-10 halogen atoms;
R₄ is a C₁-C₁₀ halogenated alkyl substituted with at least one halogen atom or a C₆-C₂₀ halogenated aryl substituted with at least one halogen atom;
R₅ is a C₁-C₅ alkyl;
X is fluorine, chlorine, bromine or iodine; preferably, X is chlorine or bromine;
m is 0.1-1.9, n is 0.1-1.9, and m+n = 2; preferably, m is 0.8-1.2, and n is 0.8-1.2;
0<q<0.2, and 0<a<0.1; preferably, 0.005≤q≤0.2, and 0.001<a<0.05.

Optionally, the internal electron donor compound is at least one selected from the group consisting of carboxylic ester, alcohol ester, ether, ketone, nitrile, amine and silane, preferably at least one of the group consisting of a mono-aliphatic or poly-aliphatic carboxylic ester, a mono-aromatic or poly-aromatic carboxylic ester, a diol ester, and a diether.

Optionally, the diol ester may be a diol carboxylic ester.

Optionally, the internal electron donor compound is at least one of the diether, and the diether has a structure as shown in formula (III): 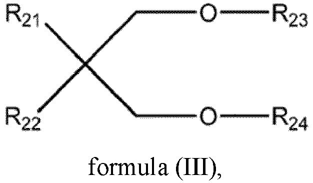 in which, R₂₁ and R₂₂ are each independently selected from the group consisting of H, C₁-C₂₀ alkyl, C₃-C₂₀ cycloalkyl, C₆-C₂₀ aryl, C₇-C₂₀ aralkyl, or C₇-C₂₀ alkaryl, and R₂₁ and R₂₂ may be optionally bonded to form a ring; and R₂₃ and R₂₄ are each independently selected from C₁-C₁₀ alkyl.

Specifically, the internal electron donor compound may be at least one selected from the group consisting of 2-(2-ethyl hexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-(2-phenyl ethyl)-1,3-dimethoxypropane, 2-(2-cyclohexyl ethyl)-1,3-dimethoxypropane, 2-(p-chlorophenyl)-1,3-dimethoxypropane, 2-(diphenyl methyl)-1,3-dimethoxypropane, 2,2-dicyclohexyl-1,3-dimethoxypropane, 2,2-dicyclopentyl-1,3-dimethoxypropane, 2,2-diethyl-1,3-dimethoxypropane, 2,2-dipropyl-1,3-dimethoxypropane, 2,2-diisopropyl-1,3-dimethoxypropane, 2,2-dibutyl-1,3-dimethoxypropane, 2-methyl-2-propyl-1,3-dimethoxypropane, 2-methyl-2-benzyl-1,3-dimethoxypropane, 2-methyl-2-ethyl-1,3-dimethoxypropane, 2-methyl-2-isopropyl-1,3-dimethoxypropane, 2-methyl-2-phenyl-1,3 -dimethoxypropane, 2-methyl-2-cyclohexyl-1,3-dimethoxypropane, 2,2-bis(2-cyclohexyl ethyl)-1,3-dimethoxypropane, 2-methyl-2-isobutyl-1,3-dimethoxypropane, 2-methyl-2-(2-ethyl hexyl)-1,3-dimethoxypropane, 2,2-diisobutyl -1,3-dimethoxypropane, 2,2-diphenyl-1,3-dimethoxypropane, 2,2-dibenzyl-1,3-dimethoxypropane, 2,2-bis(cyclohexyl methyl)-1,3-dimethoxypropane, 2-isobutyl-2-isopropyl-1,3-dimethoxypropane, 2-(1-methyl butyl)-2-isopropyl-1,3-dimethoxypropane, 2-isopropyl-2-isopentyl-1,3 -dimethoxypropane, 2-phenyl-2-isopropyl-1,3-dimethoxypropane, 2-phenyl-2-sec-butyl-1,3-dimethoxypropane, 2-benzyl-2-isopropyl-1,3-dimethoxypropane, 2-cyclopentyl-2-isopropyl-1,3-dimethoxypropane, 2-cyclopentyl-2-sec-butyl-1,3-dimethoxypropane, 2-cyclohexyl-2-isopropyl-1,3-dimethoxypropane, 2-cyclohexyl-2-sec-butyl-1,3-dimethoxypropane, 2-isopropyl-2-sec-butyl -1,3-dimethoxypropane, 2-cyclohexyl-2-cyclohexyl methyl-1,3-dimethoxypropane, and 9,9- dimethoxy methyl fluorine.

Optionally, a general formula of the titanium compound is Ti(OR₆)_{4-b}X'_{b}, in which R₆ is a C₁-C₁₄ aliphatic hydrocarbon group, X' is F, Cl, or Br, and b is an integer from 1 to 4.

Preferably, the titanium compound is at least one selected from the group consisting of titanium tetrachloride, titanium tetrabromide, titanium tetrafluoride, tributoxy titanium chloride, dibutoxy titanium dichloride, butoxy titanium trichloride, triethoxy titanium chloride, diethoxy titanium dichloride, and ethoxy titanium trichloride.

Optionally, the preparation method for the magnesium-containing compound carrier includes the following steps:
S1: a magnesium halide having a general formula MgX"Y and a first alcohol compound having a general formula R₇OH are subjected to a first contact and emulsification, to obtain a first product;
S2: an ethylene oxide compound having a structure shown in formula (II) and the first product are subjected to a second contact, to obtain a second product;
S3: a halogenated alcohol having a general formula R₁₀OH, a second alcohol compound having a general formula R₁₁OH, and the second product are subjected to a third contact, to obtain the third product; and
S4: the third product is subjected to spray drying, to obtain the magnesium-containing compound carrier.

Optionally, as a specific embodiment of the present invention, in S1, in the general formula MgX"Y, X" is selected from the group consisting of fluorine, chlorine, bromine or iodine; and Y is selected from the group consisting of fluorine, chlorine, bromine, iodine, C₁₋₆ alkyl, C₁₋₆ alkoxy, C₆₋₁₄ aryl, or C₆₋₁₄ aryloxy.

Preferably, X" is selected from chlorine or bromine, and Y is selected from the group consisting of chlorine, bromine, C₁₋₅ alkyl, C₁₋₅ alkoxy, C₆₋₁₀ aryl, or C₆₋₁₀ aryloxy. When Y is selected from C₁₋₆ alkyl or C₁₋₆ alkoxy, the alkyl and the alkoxy are linear or branched alkyl and alkoxy groups; the C₁₋₆ alkyl refers to an alkyl group having 1-6 carbon atoms, and for example, the C₁₋₆ alkyl includes, but is not limited to, methyl, ethyl, n-propyl, isopropyl, n-butyl, isobutyl, tert-butyl, n-pentyl, isopentyl, and the like; and the C₁₋₆ alkoxy refers to an alkoxy group having 1-6 carbon atoms, and for example, the C₁₋₆ alkoxy includes, but is not limited to, methoxy, ethoxy, n-propoxy, isopropoxy, n-butoxy, sec-butoxy, isobutoxy, tert-butoxy, n-pentyl, isopentyl, and the like.

The C₆₋₁₄ aryl refers to an aryl group having 6-14 carbon atoms, and for example, the C₆₋₁₄ aryl includes, but is not limited to, phenyl, o-tolyl, m-tolyl, p-tolyl, o-ethylphenyl, m-ethylphenyl, p-ethylphenyl, naphthyl, and the like.

The C₆₋₁₄ aryloxy refers to an aryloxy group having 6-14 carbon atoms, and for example, the C₆₋₁₄ aryloxy includes, but is not limited to, phenoxyl, naphthoxy, o-methyl phenoxyl, o-ethyl phenoxyl, m-methyl phenoxyl, and the like.

Optionally, the magnesium halide is at least one selected from the group consisting of magnesium chloride, magnesium bromide, phenoxymagnesium chloride, isopropoxy-magnesium chloride, and n-butoxy-magnesium chloride, and preferably is magnesium chloride.

Optionally, in the formula R₇OH, R₇ is C₁₋₁₀ alkyl.

Optionally, in S2, the ethylene oxide compound has a structural formula as shown in formula (II): 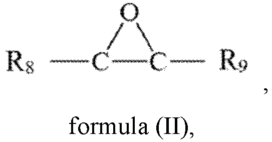 in which, R₈ and R₉ are each independently selected from the group consisting of H, C₁₋₁₀ alkyl, C₁₋₁₀ halogenated alkyl substituted with 1-10 halogen atoms; preferably, R₈ and R₉ are each independently selected from the group consisting of H, C₁₋₅ alkyl, C₁₋₅ halogenated alkyl substituted with 1-10 halogen atoms.

Optionally, the ethylene oxide compound is at least one selected from the group consisting of ethylene oxide, propylene oxide, epoxybutane, epoxy chloropropane, epoxy chlorobutane, epoxy bromopropane, and epoxy bromobutane.

Optionally, in S3, in the formula R₁₀OH, R₁₀ is selected from C₁₋₁₀ halogenated alkyl substituted with at least one halogen atom or C₆₋₂₀ halogenated aryl substituted with at least one halogen atom.

The halogenated alcohol may be a monohalogenated alcohol or a polyhalogenated alcohol, preferably chlorohydrin, bromhydrin, or iodohydrin, for example, 2,2,2-trichloroethanol, 2,2-dichloroethanol, 2-chloroethanol, 3-chloro-1-propanol, 6-chloro-1-hexanol, 3-bromo-1-propanol, 5-chloro-1-pentanol, 4-chloro-1-butanol, 2-chlorocyclohexanol, 1,2-dichloroethanol, 1,3-dichloropropanol, 1,4-dichlorobutanol or 2-iodoethanol, and the like.

However, in order to obtain a catalyst carrier with better performance, according to another preferred embodiment of the present invention, in formula R₁₀OH, R₁₀ is selected from C₁₋₁₀ halogenated alkyl substituted with at least two halogen atoms or C₆₋₂₀ halogenated aryl substituted with at least two halogen atoms, and the halogen atom is at least one selected from chlorine atom, bromine atom and iodine atom.

Preferably, the halogenated alcohol is at least one selected from the group consisting of 2,2,2-trichloroethanol, 2,2-dichloroethanol, 1,2-dichloroethanol, 1,3-dichloropropanol, 1,4-dichlorobutanol.

Optionally, in the formula R₁₁OH, Rn is C₁₋₅ alkyl.

In the present invention, the second alcohol compound is ethanol, methanol, n-propyl alcohol, isopropyl alcohol, n-butanol or isobutanol. However, in order to obtain a catalyst carrier with better performance, according to another preferred embodiment of the present invention, in the formula R₁₁OH, R₁₁ is a C₁₋₂ alkyl. That is, the second alcohol compound is methanol and/or ethanol.

Optionally, with respect to 1 mol of magnesium halide, the amount of the halogenated alcohol is 0.05-6.5 mol, and the amount of the second alcohol compound is 5-100 mol.

When the amount of halogenated alcohol compound is excessive, the catalyst carrier is sticky and forms lumps, and subsequent operations cannot be performed.

Optionally, with respect to 1 mol of magnesium halide, the amount of the first alcohol compound is 1-30 mol, and the amount of ethylene oxide compound is 1-10 mol.

Preferably, with respect to 1 mol of magnesium halide, the amount of the first alcohol compound is 6-22 mol, the amount of ethylene oxide compound is 2-6 mol, the amount of the halogenated alcohol is 1-5 mol, and the amount of the second alcohol compound is 8-80 mol, more preferably 31-50 mol.

It should be noted that, trace amounts of water carried in the above reactants also participates in the reaction for forming the spherical carrier, and therefore the spherical carrier prepared may contain trace amounts of water from reaction materials and reaction mediums. Those skilled in the art shall not consider it as limitation on the present invention.

Optionally, in S1, the first contact is performed under stirring, and conditions of the first contact include a temperature of 80 °C-120 °C and a time of 0.5 h-5 h; and preferably, in S1, the conditions of the first contact include a temperature of 80 °C-100 °C and a time of 0.5 h-3 h.

In S1, there is no special limitation on the specific operation method for the emulsification, and a method known by those skilled in the art may be used. For example, the emulsification is performed with low-speed shearing or high-speed shearing. Preferably, when the low-speed shearing is used, a stirring speed of the low-speed shearing is 400-800 rpm. The method of high-speed shearing is known by those skilled in the art, and for example, the high-speed stirring speed disclosed in CN1330086A is used. In addition, the emulsification operation may also be performed by referring to the methods disclosed in the following patent applications: for example, CN1580136A discloses that a solution containing a liquid magnesium halide compound is subjected to rotational dispersion (the rotation speed is 100-3000 rpm) in a high-gravity bed; for another example, CN1463990A discloses that a solution containing a liquid magnesium halide adduct in an emulsifying machine is discharged at a speed of 1500-8000 rpm; and for another example, US6020279A discloses that a solution containing a liquid magnesium halide adduct is emulsified by a spraying method.

Optionally, in S2, conditions of the second contact include a temperature of 50 °C-120 °C and a time of 20 min-60 min; and preferably, the conditions of the second contact include a temperature of 80 °C-100 °C and a time of 20 min-50 min.

Optionally, S3 further includes that the second product is washed with an inert solvent, and then the washed second product, the halogenated alcohol having a general formula R₁₀OH, and the second alcohol compound having a general formula R₁₁OH are subjected to a third contact; and preferably, the inert solvent is at least one selected from the group consisting of pentane, hexane, heptane, petroleum ether and gasoline.

In the present invention, there is no special limitation on specific conditions of the third contact, it is acceptable as long as the halogenated alcohol having a general formula R₁₀OH, the second alcohol compound having a general formula R₁₁OH, and the second product can contact with each other sufficiently and form a fluid. However, in order to obtain a catalyst carrier with better performance, preferably, in S3, conditions of the third contact include a condition of stirring, a temperature of 0 °C-120 °C, and a time of 0.5 h-6 h.

In the present invention, there is no special limitation on the specific manner of the third contact. The halogenated alcohol and the second alcohol compound may be mixed and synchronously contact with the second component, and the halogenated alcohol and the second alcohol compound may also sequentially contact with the second component.

As a specific embodiment of the present embodiment, in S4, existing conditions that can be used for forming a catalyst carrier for olefin polymerization may be used as conditions of spray drying. However, in order to obtain a catalyst carrier with better performance, according to a preferred embodiment of the present invention, the spray drying is carried out in a spraying machine with an atomizing nozzle. The atomizing nozzle includes a material duct and a nozzle head, and the third product is guided to the nozzle head through the material duct, and is sprayed through the nozzle head into a column body containing an inert medium of the spraying machine for curing. Preferably, the third product has a temperature of 0 °C-80 °C in the material duct, and the third product has a temperature of 80 °C-180 °C in the nozzle head; and more preferably, the third product has a temperature of 120 °C-180 °C in the nozzle head.

Optionally, in S4, conditions of the spray drying include a temperature of 60 °C-200 °C, more preferably 90 °C-150 °C. In the present invention, the temperature of the spray drying refers to the temperature of the inert medium in the spraying machine.

As a specific embodiment of the present invention, the inert medium may include a protective gas medium and/or an inert liquid medium. There is no special limitation on the type of the protective gas medium, for example, the protective gas medium may be nitrogen gas, an inert gas medium such as helium gas, and other suitable gases such as carbon dioxide and the like. The inert liquid medium is a variety of liquid media commonly used in the art that do not chemically interact with the reactants and reaction products, and preferably the inert liquid medium is silicone oil and/or an inert liquid hydrocarbon solvent; and more preferably, the inert liquid medium is at least one selected from the group consisting of kerosene, paraffin oil, petroleum jelly, white oil, methyl silicone oil, ethyl silicone oil, methyl ethyl silicone oil, phenyl silicone oil and methyl phenyl silicone oil, and further preferably the inert liquid medium is white oil.

As a specific embodiment of the present embodiment, the amount of the inert liquid medium in the spraying machine may be chosen according to the amount of the magnesium halide having a general formula MgX"Y, and is preferably 0.8 L-10 L and more preferably 2 L-8 L.

As a specific embodiment of the present invention, the preparation method of the present invention further includes common post-processing measures in the art such as solid-liquid separation, washing, drying, and the like, and there is no special limitation on this. For the solid-liquid separation, various existing methods that can realize separation of a solid phase and a liquid phase may be used, such as extraction filtration, pressure filtration or centrifugal separation, and preferably the method for solid-liquid separation is the pressure filtration. In the present invention, there is no special limitation on conditions of the pressure filtration, and it is acceptable as long as the separation of a solid phase and a liquid phase can be realized adequately. For the washing, a solid-phase product obtained may be washed by using a method known by those skilled in the art, for example, a solid-phase product obtained may be washed by using an inert hydrocarbon solvent (for example, pentane, hexane, heptane, petroleum ether and gasoline). In the present invention, there is no special limitation on specific conditions of drying, for example, the drying may be performed at a temperature of 20 °C-70 °C, in a time of 0.5 h-10 h, under the atmospheric pressure or a reduced pressure.

As a specific embodiment of the present invention, there is no special limitation on the composition of the catalyst, and the composition of the catalyst may be an existing composition of the catalyst for olefin polymerization in the art. However, in order to obtain a catalyst that is suitable for olefin polymerization, in particular propylene polymerization, preferably, the catalyst contains a carrier, a titanium halide compound, and an electron donor compound. Preferably, the titanium halide compound is at least one selected from the group consisting of titanium tetrachloride, titanium tetrabromide, titanium tetraiodide, tetra-n-butoxy-titanium, tetraethoxy-titanium, tri-n-butoxy-titanium monochloride, di-n-butoxy-titanium dichloride, n-butoxy-titanium trichloride, triethoxy-titanium monochloride, diethoxy-titanium dichloride, ethoxy-titanium trichloride, and titanium trichloride; and preferably, the electron donor compound is at least one selected from the group consisting of diisobutyl phthalate, diol carboxylate, and phosphate ester. Meantime, in the present invention, there is no special limitation on contents of respective components in the catalyst, and those skilled in the art may make reasonable adjustment and design according to actual needs.

Optionally, the magnesium-containing compound carrier has an average particle diameter of 2-100 microns with a particle size distribution of less than 2; and preferably, the magnesium-containing compound carrier has an average particle diameter of 2-19 microns with a particle size distribution of 0.6-1.6.

In order to obtain an olefin polymer with a higher packing density when a catalyst containing a magnesium-containing compound carrier is used for olefin polymerization, it is further preferred that the magnesium-containing compound carrier has an average particle diameter of 2-10 microns with a particle size distribution of 0.6-1.

In the preparation method for the polypropylene microsphere of the present invention, the catalyst has a "morphology replication" property in catalyzing the propylene polymerization. Although a spherical catalysts may not necessarily produce a spherical polymer, a spherical polymer usually can only be obtained from a spherical catalyst. The smaller the particle size of the catalyst, the smaller the particle size of the polymer obtained, and the structure and morphology of the catalyst itself play an important role on the morphology of the polymer. Excellent structure and morphology of the catalyst are beneficial to reduce the frictional force between polymers and reduce the angle of repose of the final polymer, thereby facilitating the production and delivery of the polymer.

According to a third aspect of the present invention, a 3D printing raw material is provided, which includes the above polypropylene microsphere and/or a polypropylene microsphere prepared by the above preparation method.

According to a fourth aspect of the present invention, provided is a use of the above polypropylene microsphere or a polypropylene microsphere prepared by the above preparation method in 3D printing, in particular in laser sintering printing, and most preferably in selective laser sintering (SLS).

Compared with existing technologies, the present invention has the following beneficial effects:
1. The half-peak width of the existing ordinary polypropylene microsphere is relatively wide, while the half-peak width of the polypropylene microsphere of the present invention is only 4 °C-10 °C, which is much narrower than that of the existing polypropylene microsphere. This indicates that the crystallization sequence distribution of the obtained polypropylene microsphere is relatively uniform, and when the polypropylene microsphere is used for 3D printing, it can improve the uniformity of melting and fusion of the polymer particle and can make melting of the 3D printing uniform and make the product have good performance, thereby improving the structural strength and surface properties of a sintered sample. At the same time, compared with the polypropylene microsphere prepared by using a metallocene catalyst, the present invention has a wider molecular weight distribution, so that the obtained sintered product has better rigid-tough balance.
2. The polypropylene microsphere of the present invention has an average particle diameter of less than 160 microns, and can be directly used for 3D printing without secondary processing; the polypropylene microsphere of the present invention has an angle of repose of less than 23° and has better fluidity, so that powder is laid more uniformly during printing; and the polypropylene microsphere of the present invention has an ethylene content of greater than 0.2 wt %, so that no warping occurs during 3D printing. The polypropylene microsphere of the present invention has good spherical morphology, regular particle shape, and good fluidity, and thus has great industrial application prospect.
3. According to the preparation method for the polypropylene microsphere of the present invention, the catalyst has a larger specific surface area and good polymerization activity. At the same time, due to the characteristics of the catalyst, the usage of alkyl aluminum can be reduced, and a smaller amount of triethylaluminum is mixed with cyclohexyl methyl dimethoxysilane, a catalyst, a hydrogen gas, and a propylene monomer for reaction to obtain a polypropylene microsphere, so that the ash content of the obtained polymer microsphere is further reduced and substantially there is no non-spherical material.
4. In the preparation method for the polypropylene microsphere of the present invention, the spherical polymer is obtained by direct polymerization by means of the "morphology replication" characteristic of the catalyst; since the catalyst has good structure and morphology, the obtained polymers have a small frictional force therebetween and have a small angle of repose, thereby facilitating the production and delivery of the polymer.
5. The polypropylene microsphere provided by the present invention is obtained by direct polymerization in a reactor, which avoids post-processing procedures and saves cost.

### Brief Description of the Drawings

Fig. 1 is an electron microscope view of an obtained polypropylene powder material according to Example 1-1; and
Fig. 2 is a schematic diagram of DSC.

### Detailed Description of the Embodiments

The present invention is further described below in conjunction with specific embodiments, and the description does not constitute any limitation on the present invention.

In the present invention, the average particle diameter and the particle size distribution of the magnesium-containing compound carrier is measured by a Masters Sizer 2000 particle diameter analyzer (manufactured by Malvern Instruments Ltd.).

In the present invention, the surface appearance of the magnesium-containing compound carrier is observed with an XL-30 type field emission electron microscope produced by FEI company, USA.

In the present invention, the structure and composition of the magnesium-containing compound carrier is tested by performing a 1H-NMR test on the carrier with an AVANCE 300 nuclear magnetic resonance spectrometer from Bruker company, Switzerland, as well as performing a test on the carrier with a PY-2020iD pyrolysis apparatus from Fronteerlab company, TraceGC Ultra chromatographic instrument and DSQ II mass spectrometer from Thermo Fisher Company.

In the present invention, the DSC detection is performed by a method stipulated in GBT 19466 Differential Scanning Calorimetry (DSC) for plastics. The half-peak width detected by DSC refers to the absolute value of the temperature difference between two intersecting points in which a straight line intersects with both sides of the peak, wherein the straight line being drawn through midpoint of the peak height and parallel to the baseline.

In the present invention, the molecular weight distribution index Mw/Mn of the polypropylene powder is measured by a method stipulated in GB/T36214-2018.

In the present invention, the copolymerization activity of the catalyst is evaluated by a ratio of the weight of the product obtained after polymerization to the weight of the catalyst used.

In the present invention, the bulk density of the polypropylene powder is measured by a method stipulated in GB/T 1636-2008.

In the present invention, the ash content of the polypropylene powder is measured by using a method stipulated in GB_T 9345.1-2008.

In the present invention, the specific surface area of the polypropylene powder is measured by a POREMASTER GT60 type mercury injection apparatus.

In the present invention, the angle of repose of the polypropylene powder is measured by a method stipulated in GB/T 11986-1989.

In the present invention, the length-diameter ratio of the polypropylene powder refers to a ratio of a long axis to an average short axis in a particle projection.

In the present invention, the ethylene content of the polypropylene powder is measured by using a Fourier transform infrared spectrometer, and a sample is prepared by using a hot-pressing film method.

In the present invention, the tensile strength of a spline is measured by a method stipulated in GB/T 1040.2-2006.

In the present invention, the surface smoothness is measured by a comparison method: a surface to be tested is compared with the standard product by a visual method, a tactile method or other methods, and then the roughness of the surface to be tested is evaluated. Five technicians give scores based on 10 points of a standard product, and then the scores are averaged.

| Scores | Evaluation |
|---|---|
| 1-2 | very poor |
| 3-4 | poor |
| 5-6 | medium |
| 7-8 | good |
| 9-10 | excellent |

In the present invention, unless otherwise specified, all raw materials are available on the market:
1,3-dichloropropanol is purchased from J&K Scientific company;
epoxy chloropropane is purchased from J&K Scientific company;
diisobutyl phthalate is purchased from J&K Scientific company;
titanium tetrachloride is purchased from J&K Scientific company;
triethyl aluminum is purchased from J&K Scientific company; and
cyclohexyl methyl dimethoxysilane is purchased from J&K Scientific company.

In respective examples and comparative examples of the present invention, unless otherwise specified, the emulsification is performed under stirring at 600 rpm during the preparation of the catalyst carrier.

DSC is performed by using a Perkin-Elmer DSC-7 type differential scanning calorimeter, a sample is heated at 10 °C/min to 200 °C, kept at 200 °C for 5 min, then cooled to 50 °C and kept at 50 °C for 1 min, and then heated at 10 °C/min to 200 °C again. For a second heating test result, a formula λi=(dH/dt)ᵢ₊₁-(dH/dt); is used to calculate λᵢ≮0 (i satisfying Tₘ<Tᵢ<T_{fm}). If an obtained result is less than 0, then λᵢ ≮ 0 is no, otherwise, if none of values calculated is less than 0, then λi≮0 is yes. λᵢ is a difference of heat flow rate between temperature Tᵢ₊₁ and temperature Tᵢ.

### Example 1-1

### 1) Preparation of the magnesium-containing compound carrier

S1: To a 0.6 L autoclave, 0.08 mol of magnesium chloride and 1.7 mol of ethanol (the first alcohol compound) were added sequentially, the temperature was raised to 90 °C under stirring, and the mixture was allowed to react at that constant temperature for 1h to carry out a first contact, and then emulsified to obtain a first product;
S2: The first product was subjected to a second contact with 0.48 mol of epoxy chloropropane, to obtain a second product, with conditions of the second contact including a temperature of 90 °C and a time of 30 min;
S3: After pressure filtration of the second product, it was subjected to a third contact by fully mixing and stirring with 2.5 mol of ethanol (the second alcohol compound) and 0.35 mol of 1,3 dichloropropanol (the halogenated alcohol) to form a fluid, to obtain a third product; and
S4: With a spraying machine B-209 having a nozzle head and a material duct, the third product was sprayed into a circulating nitrogen at 100 °C in the tower of the spraying machine for spray drying to obtain a catalyst spherical carrier Z1, the third product having a temperature of 15 °C in the material duct and a temperature of 120 °C in the nozzle head.

After testing, the catalyst spherical carrier Z1 has an average particle diameter (D50) of 4 microns and a particle size distribution ((D90-D10)/D50) of 0.9.

After observation, the catalyst spherical carrier Z1 has regular particle morphology, smooth surface, substantially spherical shape, relatively concentrated particle size distribution, and substantially free of non-spherical particle.

During the preparation of the catalyst spherical carrier Z1, no blocking occurred at the nozzle head of the spraying machine, and 11.8 g of the catalyst spherical carrier Z1 was obtained in total.

### 2) The preparation of the catalyst for olefin polymerization

S1: To a 300 mL reaction flask, 100 mL of titanium tetrachloride was added and cooled to -20 °C, followed by adding of 8 g of the catalyst spherical carrier Z1 obtained in Example 1, and then the mixture was stirred at -20°C for 30min to obtain the first product;
S2: The first product obtained in S1 was slowly heated to 110°C, during which 1.5 mL of 2-isopropyl-2-isopentyl-1,3-dimethoxypropane was added, the resulting mixture was maintained for 30 min at 100 °C, and the liquid was removed by filtration, to obtain a second product;
S3: The second product obtained in S2 was washed twice with titanium tetrachloride, then washed for three times with hexane, and dried to obtain a catalyst C1 for olefin polymerization.

### 3) The preparation of the polypropylene copolymer microsphere

Under nitrogen atmosphere, to a 5L of stainless steel autoclave, 0.25 mmol of triethylaluminum in hexane (the concentration of triethylaluminum is 0.5 mmol/mL), 10 mL of anhydrous hexane, 10 mg of the catalyst C1, 1.5 L (standard volume) of hydrogen gas, and 2L of liquid propylene monomer were added, and ethylene was introduced. The resulting mixture was heated to 70 °C and allowed to react at this temperature for 40 min, and then the reaction was cooled, the pressure was released, the resulting polymer was discharged and dried to obtain a copolymerized polypropylene powder.

Viewed from an electron microscope, the copolymerized polypropylene powder presents excellent spherical morphology (Fig. 1), and is substantially free of non-spherical material.

### Example 1-2

In this example, polypropylene was prepared in the same manner as in Example 1-1, except that the volume of the hydrogen gas was different.

Specifically, 1.5 L (standard volume) of hydrogen gas was replaced with 6.5 L (standard volume) of hydrogen gas to obtain the polypropylene powder.

Viewed from the electron microscope, the polypropylene powder presents excellent spherical morphology, and is substantially free of non-spherical material.

### Example 2-1

(1) To a 0.6 L autoclave, 0.08 mol of magnesium chloride and 1.4 mol of ethanol (the first alcohol compound) were added, the temperature was raised to 90 °C under stirring, and the mixture was allowed to react at that constant temperature for 1.5h to carry out a first contact, and then emulsified to obtain a first product;
(2) The first product was subjected to a second contact with 0.35 mol of epoxy chloropropane, to obtain a second product, with conditions of the second contact including a temperature of 90 °C and a time of 30 min;
(3) After pressure filtration of the second product, it was subjected to a third contact by fully mixing and stirring with 2.5 mol of ethanol (the second alcohol compound) and 0.25 mol of 1,3 dichloropropanol (the halogenated alcohol) to form a fluid, to obtain a third product; and
(4) With a spraying machine B-209 having a nozzle head and a material duct, the third product was sprayed into a circulating nitrogen at 100 °C in the tower of the spraying machine for spray drying to obtain a catalyst spherical carrier Z2, the third product having a temperature of 15 °C in the material duct and a temperature of 120 °C in the nozzle head.

After testing, the catalyst spherical carrier Z2 has an average particle diameter (D50) of 4 microns and a particle size distribution ((D90-D10)/D50) of 0.8.

After observation, the catalyst spherical carrier Z2 for olefin polymerization has regular particle morphology, smooth surface, substantially spherical shape, relatively concentrated particle size distribution, and substantially free of non-spherical particle.

During the preparation of the catalyst spherical carrier Z2, no blocking occurred at the nozzle head of the spraying machine, and 11.9 g of the catalyst spherical carrier Z2 was obtained in total.

Polypropylene was prepared in the same manner as in Example 1-1, except that in step S 1, the type of the catalyst carrier was different.

Specifically, the catalyst spherical carrier Z1 was replaced with the same weight of the catalyst spherical carrier Z2 prepared in Example 2-1, to obtain the catalyst C2 for olefin polymerization.

Observed through the electron microscope, the catalyst C2 has a spherical shape. After testing, the catalyst C2 has an average particle diameter (D50) of 4 microns, and a particle diameter distribution ((D90-D10)/D50) of 0.8.

The obtained polypropylene powder has good particle morphology and presents excellent spherical morphology by viewing from the electron microscope, and substantially there is no non-spherical particle.

### Example 2-2

In this example, polypropylene was prepared in the same manner as in Example 2-1, except that the volume of the hydrogen gas was different.

Specifically, 1.5 L (standard volume) of hydrogen gas was replaced with 6.5 L (standard volume) of hydrogen gas to obtain the polypropylene powder.

Viewed from the electron microscope, the polypropylene powder presents excellent spherical morphology, and substantially there is no non-spherical material.

### Example 3-1

(1) To a 0.6 L autoclave, 0.08 mol of magnesium chloride and 1.4 mol of ethanol (the first alcohol compound) were added, the temperature was raised to 90 °C under stirring, and the mixture was allowed to react at that constant temperature for 1.5h to carry out a first contact, and were emulsified, so as to obtain a first product;
(2) The first product was subjected to a second contact with 0.35 mol of epoxy chloropropane, to obtain a second product, with conditions of the second contact including a temperature of 90 °C and a time of 30 min;
(3) After pressure filtration of the second product, it was subjected to a third contact by fully mixing and stirring with 2.5 mol of ethanol (the second alcohol compound) and 0.1 mol of 1,3 dichloropropanol (the halogenated alcohol) to form a fluid, to obtain a third product; and
(4) With a spraying machine B-209 having a nozzle head and a material duct, the third product was sprayed into a circulating nitrogen at 100 °C in the tower of the spraying machine to obtain a catalyst spherical carrier Z3, the third product having a temperature of 15 °C in the material duct and a temperature of 120 °C in the nozzle head.

After testing, the catalyst spherical carrier Z3 has an average particle diameter (D50) of 5 microns and a particle size distribution ((D90-D10)/D50) of 0.8.

After observation, the catalyst spherical carrier Z3 has regular particle morphology, smooth surface, substantially spherical shape, relatively concentrated particle size distribution, and substantially free of non-spherical particle.

During the preparation of the catalyst spherical carrier Z3, no blocking occurred at the nozzle head of the spraying machine, and 12.0 g of the catalyst spherical carrier Z3 was obtained in total.

The catalyst polymerization is the same as that in Example 2-1, except that Z2 was replaced with Z3.

The polypropylene powder presents excellent spherical morphology by viewing from the electron microscope, and substantially there is no non-spherical particle.

### Example 3-2

In this example, polypropylene was prepared in the same manner as in Example 3-1, except that the volume of the hydrogen was different.

Specifically, 1.5 L (standard volume) of hydrogen gas was replaced with 6.5 L (standard volume) of hydrogen gas to obtain the polypropylene powder.

Viewed from the electron microscope, the polypropylene powder presents excellent spherical morphology, and substantially there is no non-spherical material.

### Example 4

In this example, polypropylene was prepared in the same manner as in Example 1-1, except that, in addition to adding 0.25 mmol of triethylaluminum, 0.01 mmol of cyclohexyl methyl dimethoxysilane was also added, and the polypropylene powder was obtained.

Viewed from the electron microscope, the polypropylene powder presents excellent spherical morphology, and substantially there is no non-spherical material.

### Comparative Preparation Example 3

(1) To a 0.6 L autoclave, 0.08 mol of magnesium chloride and 1.7 mol of ethanol were added, the temperature was raised to 90 °C under stirring, and the mixture was allowed to react at that constant temperature for 1 h, then 0.48 mol of epoxy chloropropane was added and reacted at 90 °C for 30 min, to obtain a first product;
(2) After pressure filtration of the first product, 2.5 mol of ethanol was added and stirred to form a fluid mixture; and
(3) With a spraying machine having a nozzle head and a material duct, the fluid mixture was sprayed into a circulating nitrogen gas at 100 °C to obtain a catalyst carrier DZ3 for olefin polymerization, the third product having a temperature of 15 °C in the material duct and a temperature of 120 °C in the nozzle head.

The catalyst carrier DZ3 for olefin polymerization has an average particle diameter (D50) of 3 microns and a particle size distribution ((D90-D10)/D50) of 0.8.

### Comparative Example 1

Polypropylene was prepared in the same manner as in Example 1-1, except that in the preparation of the catalyst for olefin polymerization, 2-isopropyl-2-isopentyl-1,3-dimethoxypropane was replaced with diisobutyl phthalate.

### Comparative Example 2

Polypropylene was prepared in the same manner as in Comparative Example 1, except that in the preparation of the polypropylene copolymer microsphere, the volume of the hydrogen gas was different, and 6.5 L hydrogen gas was used.

### Comparative Example 3

Polypropylene was prepared in the same manner as in Example 1-1, except that Z1 was replaced with DZ3.

### Comparative Example 4

Polypropylene was prepared in the same manner as in Example 1-1, except that no ethylene was used during polymerization.

### Comparative Example 5

(1) A magnesium halide adduct MgXY·mR1OH was obtained according to the method disclosed in Example 1 of CN1718595, specifically,
   In a 150 L reactor equipped with a stirrer, 10 kg anhydrous magnesium dichloride and 12.6 kg ethanol were added to 60 L white oil with a viscosity of 30 centipoises (20 °C), and the mixture was allowed to react at 125 °C for 2 hours. Then the obtained mixture of molten adduct and the white oil was transferred to a methyl silicone oil medium preheated to 125 °C; the viscosity of methyl silicone oil was 300 centipoises (20 °C), and the amount of methyl silicone oil was 120 L; and the mixture was stirred at a speed of 200 rpm for 10-30 minutes to get a mixture. The resulting mixture was introduced into a super-gravity rotary bed for dispersion, and under stirring, the dispersed mixture was introduced into 1200 L hexane medium pre-cooled to -35 °C, and the molten magnesium dichloride/alcohol adduct dispersed into small droplets was cooled and solidified to form spherical solid particles. Solid particles were filtered out from the suspension obtained after rapid cooling, and washed with hexane at room temperature for five times with the amount of hexane being 100 L per time, and the solid was obtained by drying under vacuum at 60 °C.

The magnesium halide adduct has an average particle diameter (D50) of 52 microns and a particle size distribution ((D90-D10)/D50) of 1.1. By observing the morphology of the particles with an electron microscope, it was found that the magnesium halide adduct has regular particle morphology, a smooth surface, and a concentrated particle size distribution.

By gas chromatography-mass spectrometry, nuclear magnetic resonance and element analysis, the structural formula of magnesium halide adduct D5 was determined to be MgCl₂·2.5C₂H₅OH.

Except that Z1 was replaced by D5, other operations were the same as those in Example 1-1.

### Comparative Example 6

The procedure was the same as described in Comparative Example 5 in the preparation of the polypropylene copolymer microsphere, except that the volume of the hydrogen gas used was changed to 6.5 L.

### Comparative Example 7

Random copolypropylene particles were prepared by using a commercial DQC401 catalyst, and pulverized after liquid nitrogen cryogenic treatment.

**Table 1**

| | | **Copolymerization activity (kgPP/g . Cat)** | **C2%** | **Particle diameter of polymer (µm)** | **Angle of repose °C** | **Ash content ppm** | **λᵢ ≮0** | **Specific surface area m²/g** | **Isotactic index II (%)** |
|---|---|---|---|---|---|---|---|---|---|
| Example 1-1 | - | 40.6 | 3.6 | 108 | 20 | 140 | yes | 15.2 | 88.1 |
| Example 1-2 | - | 40.9 | 3.2 | 109 | 20 | 137 | yes | 15.0 | 90.1 |
| Example 2-1 | - | 39.1 | 3.3 | 107 | 20 | 139 | yes | 14.6 | 90.1 |
| Example 2-2 | - | 39.6 | 2.8 | 108 | 20 | 137 | yes | 14.7 | 89.3 |
| Example 3-1 | - | 37.6 | 3.0 | 107 | 21 | 137 | yes | 13.1 | 90.0 |
| Example 3-2 | - | 36.6 | 2.2 | 105 | 21 | 137 | yes | 13.0 | 92.3 |
| Example 4 | - | 36.8 | 3.4 | 104 | 21 | 141 | yes | 14.1 | 89.2 |
| Comparative Example 1 | sticky polymer | 25.1 | 2.0 | 95 | 90* | 168 | - | 6.1 | - |
| Comparative Example 2 | sticky polymer | 25.5 | 1.9 | 99 | 90* | 167 | - | 5.2 | - |
| Comparative Example 3 | - | 30.1 | 1.5 | 101 | 38.1 | 168 | - | 10.6 | 92.9 |
| Comparative Example 4 | - | 32.9 | 0 | 109 | - | - | - | - | - |
| Comparative Example 5 | - | 44.5 | - | 1329 | - | - | no | 7.9 | - |
| Comparative Example 6 | - | 45.1 | - | 1385 | - | - | no | 7.6 | - |
| Comparative Example 7 | - | - | 2.1 | 64 | ** | 308 | no | - | - |

| | | | | | | | | | |
|---|---|---|---|---|---|---|---|---|---|
| * unable to flow; ** unable to fall by gravity | | | | | | | | | |

**Table 2**

| | Half-peak width (°C) | Molecular weight distribution | Length-diameter ratio |
|---|---|---|---|
| Example 1-1 | 7.2 | 7.0 | 1 |
| Example 1-2 | 7.0 | 6.9 | 1 |
| Example 2-1 | 7.2 | 6.8 | 1 |
| Example 2-2 | 7.0 | 6.8 | 1 |
| Example 3-1 | 7.2 | 6.6 | 1 |
| Example 3-2 | 7.0 | 6.5 | 1 |
| Example 4 | 8.0 | 5.8 | 1 |
| Comparative Example 1 | 16.1 | - | - |
| Comparative Example 2 | 15.6 | - | - |
| Comparative Example 3 | - | 5.8 | 1 |
| Comparative Example 4 | - | 5.5 | 1 |
| Comparative Example 5 | 16.3 | 5.6 | 1.06 |
| Comparative Example 6 | 16.0 | 5.4 | 1.07 |
| Comparative Example 7 | 16.2 | - | 1.8 |

It can be seen from the above Table 2 that the polypropylene microsphere of the present invention has a wider molecular weight distribution, a narrower half-peak width, and a relatively uniform crystallization sequence distribution, and when the polypropylene microsphere is used for 3D printing, particles are melted uniformly, so that the obtained products have good performance. Besides, the wider molecular weight distribution may also give the product better rigid-tough balance.

### Test example 1: Laser sintering 3D printing

5 mg antioxidant 1010 was dissolved in 100 ml of hexane, followed by the addition of a certain amount of the polypropylene powder according to the above examples or comparative examples, and the mixture were mixed uniformly and then dried under vacuum. To a selective laser sintering printer, a certain amount of the above polypropylene powder was added, and parameters were adjusted as follows: operating temperature of 130-132 °C, laser power of 40W, scanning speed of 1500 mm·s⁻¹, scanning spacing of 0.1 mm. A spline was printed, and its mechanical properties were tested. Specific results are shown in Table 3.

**Table 3**

| | Polymer shape | Tensile strength/ MPa | Surface smoothness |
|---|---|---|---|
| Example 1-1 | spherical shape | 33.9 | excellent |
| Example 1-2 | spherical shape | 29.3 | excellent |
| Example 2-1 | spherical shape | 31.0 | excellent |
| Example 2-2 | spherical shape | 27.3 | excellent |
| Example 3-1 | spherical shape | 28.7 | good |
| Example 3-2 | spherical shape | 25.2 | good |
| Example 4 | spherical shape | 30.1 | excellent |
| Comparative Example 1 | spherical shape | unable to print | - |
| Comparative Example 2 | spherical shape | unable to print | - |
| Comparative Example 3 | spherical shape | 16.8 | poor |
| Comparative Example 4 | spherical shape | unable to print | - |
| Comparative Example 5 | spherical shape | unable to print | - |
| Comparative Example 6 | spherical shape | unable to print | - |
| Comparative Example 7 | irregular particle shape | unable to print | - |

In summary, the copolymerized polypropylene powder prepared by using the catalyst provided by the present invention has excellent spherical morphology, good fluidity, and a small angle of repose, and a 3D printed product has a good tensile property and good smoothness. Due to a smaller angle of repose, the powder laying effect is good, which is beneficial to reducing the spatial defect of the printing process. Moreover, the co-polypropylene powder has a relatively large specific surface area, and thus the fusion effect with the antioxidant is better, which greatly reduces the local degradation of polypropylene in the laser sintering process. The ethylene-propylene copolymerized product of the present invention has a narrower half-peak width measured by DSC and a more uniform copolymer crystal composition, which improves the uniformity of melting and fusion of polymer particles and improves the structural strength and surface properties of the sintered sample.

### Test example 2: Autoclave foamed beads

1. The compressive strength of the foamed molded body is measured by the method of determination of compressive properties of rigid foam plastics under GB/T8813-2008, and the bending strength of the foamed molded body is measured by the method of determination of bending properties of rigid foam plastics under GB/T8812-2007.
2. The method for testing a foaming ratio of formed beads is as follows: a density of foamed beads of polypropylene compotion is obtained by a drainage method with a density tester CPA225D, density accessory YDK01, German Satorius company, according to the methods described in GB/T1033.1-2008 and ISO1183-1:2012. The foaming ratio of the obtained polypropylene compotion foamed material is calculated by the formula: b=ρ1/ρ2, where b is the foaming ratio, ρ1 is the density of the binary random copolymerized polypropylene base resin, and ρ2 is the apparent density of the foamed material.

200 g of the copolymerized polypropylene microsphere was added into an autoclave, then 0.2 g of antioxidant 1010, 1000 g of a dispersion medium (deionized water), 1g of a surfactant (sodium dodecyl benzene sulfonate), 1 g of a dispersant (kaolin), and 0.02g of a dispersion enhancer (aluminum sulfate) were added and mixed. Subsequently, low-pressure carbon dioxide was filled to replace all the air in the autoclave, and then high-pressure carbon dioxide was filled. The temperature of the autoclave was increased to 138 °C, the pressure was controlled to be 6 MPa, and swelling and permeation were performed for 30 minutes. Then the pressure was quickly relieved to zero gauge pressure, the pressure relief rate was controlled to 10 MPa/s, and the material in the autoclave was placed in cold water of 5 °C, then dried. Different foamed beads obtained by the above-mentioned foaming process were molded by a molding machine under a certain steam pressure for a certain time, and then the obtained molded body was aged for 24 hours at a temperature of 100 °C and under the standard atmospheric pressure, to obtain the molded body of the foamed beads.

**Table 4**

| | Foaming rate of foamed beads | Steam pressure /kg | molding time | Surface smoothness of the molded body of foamed beads |
|---|---|---|---|---|
| Example 1-1 | 28.6 | 1.4 | 35 | good |
| Example 1-2 | 22.4 | 1.3 | 35 | good |
| Example 2-1 | 26.6 | 1.4 | 35 | good |
| Example 2-2 | 20.5 | 1.3 | 35 | good |
| Example 3-1 | 23.9 | 1.3 | 35 | good |
| Example 3-2 | 17.4 | 1.3 | 35 | good |
| Example 4 | 27.4 | 1.4 | 35 | good |
| Comparative Example 1 | unable to foam | 1.3 | 35 | - |
| Comparative Example 2 | unable to foam | 1.3 | 35 | - |
| Comparative Example 3 | 13 | 2.4 | 65 | medium |
| Comparative Example 4 | 5 | 2.3 | 60 | good |
| Comparative Example 5 | 20 | 2.6 | 80 | very poor |
| Comparative Example 6 | 18 | 2.5 | 80 | very poor |
| Comparative Example 7 | 16.2 | 2.4 | 75 | poor |

It can be seen from data in Table 4 that, when the copolymerized microsphere of the polymer according to the present invention is used for foaming, the foaming ratio is higher, and moreover the steam pressure required is lower and the molding time is shorter. A lower steam pressure not only helps to save energy and reduce costs, but also helps to reduce the process risk. A shorter molding time means higher production efficiency, which is very meaningful for improving profits and increasing production income.

It should be noted that, endpoints and any values of ranges disclosed herein are not limited to the exact ranges or values, and these ranges or values should be understood as containing values close to those ranges or values. For a numeric range, one or more new numeric ranges may be obtained by combining endpoint values of respective ranges, combining endpoint values of respective ranges and individual point values, and combining individual point values, and these numeric ranges shall be deemed to be specifically disclosed herein.

The above embodiments are used only to explain the present invention and do not constitute any limitation on the present invention. The present invention is described in conjunction with exemplary embodiments, but it should be understood that words used therein are descriptive and explanatory words and not restrictive words. The present invention may be amended within the scope of the claims of the present invention, and may be modified without deviation from the scope and spirit of the present invention. Although the present invention described herein relates to specific methods, materials, and embodiments, it does not mean that the present invention is limited to specific examples disclosed therein, and on the contrary the present invention may be extended to all other methods and applications with the same function.

## Claims

1. A polypropylene microsphere, **characterized in that**, the polypropylene microsphere comprises 0.2 wt%-10 wt% of a structural unit derived from ethylene and 90 wt%-99.8 wt% of a structural unit derived from propylene, wherein a melting heat absorption curve of the polypropylene microsphere is obtained by means of a differential scanning calorimeter, and a half-peak width of the melting heat absorption curve of the polypropylene microsphere is 4-10 °C.

2. The polypropylene microsphere according to claim 1, **characterized in that**, the half-peak width of the melting heat absorption curve of the polypropylene microsphere is 5-8 °C.

3. The polypropylene microsphere according to claim 1 or claim 2, **characterized in that**, a molecular weight distribution of the polypropylene microsphere is 4-9.

4. The polypropylene microsphere according to any one of claims 1 to 3, **characterized in that**, a bulk density of the polypropylene microsphere is 0.20 g/cm³-0.50 g/cm³, preferably 0.32 g/cm³-0.48 g/cm³; and/or
an angle of repose of the polypropylene microsphere is 10°-23°, preferably 13°-20°; and/or
an isotactic index of the polypropylene microsphere is 60%-94%, preferably 64%-90%; and/or
an ash content of the polypropylene microsphere is 0.005%-0.04%; and/or
a melt index of the polypropylene microsphere is 3-160 g/10min, preferably 15-100 g/10min.

5. The polypropylene microsphere according to any one of claims 1 to 4, **characterized in that**, conducting a DSC test, a DSC result satisfies the following feature: λi=(dH/dt)ᵢ₊₁-(dH/dt)t, λi≮0 (i satisfying Tₘ<Tᵢ<T_{fm}), wherein the vertical coordinate indicates heat flow rate dH/dt, and the horizontal ordinate indicates temperature T.

6. The polypropylene microsphere according to any one of claims 1 to 5, **characterized in that**,
an average particle diameter of the polypropylene microsphere is 50 µm to 200 µm; preferably, the average particle diameter of the polypropylene microsphere is 60 µm to 160 µm; and most preferably, the average particle diameter of the polypropylene microsphere is 80 µm to 120 µm.

7. The polypropylene microsphere according to any one of claims 1 to 6, **characterized in that**, a length-diameter ratio of the polypropylene microsphere is 0.9-1.1; preferably, the length-diameter ratio of the polypropylene microsphere is 0.95-1.05; and most preferably, the length-diameter ratio of the polypropylene microsphere is 1.

8. A preparation method for the polypropylene microsphere according to any one of claims 1 to 7, **characterized in that**, the method comprising: copolymerizing propylene-containing olefins in the presence of an olefin polymerization catalyst system to obtain a polypropylene microsphere.

9. The preparation method according to claim 8, **characterized in that**, the olefin polymerization catalyst system comprises the following components or a reaction product of the following components: a catalyst, an alkyl aluminum compound, and an external electron donor compound that is optionally added or not added; and/or
the catalyst comprises a magnesium-containing compound carrier, a titanium compound, and an internal electron donor compound; and/or
a molar ratio of the titanium compound, the magnesium-containing compound carrier, and the internal electron donor compound is (37-255) : (2-15) : 1, preferably (67-235) : (4-12) : 1.

10. The preparation method according to claim 9, **characterized in that**, the magnesium-containing compound carrier has a structure as shown in formula (I): 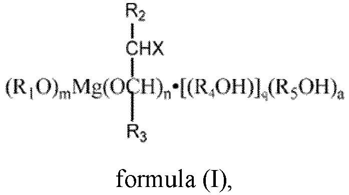
in which, R₁ is a C₁-C₁₀ alkyl;
R₂ and R₃ are same or different, and each independently selected from the group consisting of H, C₁-C₁₀ alkyl, or a halogenated alkyl substituted with 1-10 halogen atoms;
R₄ is a C₁-C₁₀ halogenated alkyl substituted with at least one halogen atom or a C₆-C₂₀ halogenated aryl substituted with at least one halogen atom;
R₅ is a C₁-C₅ alkyl;
X is fluorine, chlorine, bromine or iodine;
m is 0.1-1.9, n is 0.1-1.9, and m+n = 2; preferably, m is 0.8-1.2, and n is 0.8-1.2;
0<q<0.2, and 0<a<0.1; preferably, 0.005≤q≤0.2, and 0.001<a<0.05; and/or
the internal electron donor compound is at least one selected from the group consisting of carboxylic ester, alcohol ester, ether, ketone, nitrile, amine and silane, preferably at least one of the group consisting of a mono-aliphatic or poly-aliphatic carboxylic ester, a mono-aromatic or poly-aromatic carboxylic ester, a diol ester, and a diether; and/or
a general formula of the titanium compound is Ti(OR₆)_{4-b}X'_{b},
in which, R₆ is a C₁-C₁₄ aliphatic radical;
X' is F, Cl, or Br; and
b is an integer from 1 to 4;
preferably, the titanium compound is at least one selected from the group consisting of titanium tetrachloride, titanium tetrabromide, titanium tetrafluoride, tributoxy titanium chloride, dibutoxy titanium dichloride, butoxy titanium trichloride, triethoxy titanium chloride, diethoxy titanium dichloride, and ethoxy titanium trichloride.

11. The preparation method according to claim 9 or 10, **characterized in that**, the preparation method for the magnesium-containing compound carrier comprises the following steps:
S1: a magnesium halide having a general formula MgX"Y and a first alcohol compound having a general formula R₇OH are subjected to a first contact and emulsification, to obtain a first product;
wherein in the general formula MgX"Y, X" is any one selected from the group consisting of fluorine, chlorine, bromine and iodine; and Y is any one selected from the group consisting of fluorine, chlorine, bromine, iodine, C₁₋₆ alkyl, C₁₋₆ alkoxy, C₆₋₁₄ aryl and C₆₋₁₄ aryloxy;
in the formula R₇OH, R₇ is a C₁₋₁₀ alkyl;
S2: an ethylene oxide compound having a structure shown in formula (II) and the first product are subjected to a second contact, to obtain a second product;
wherein in S2, the ethylene oxide compound has a structural formula as shown in formula (II): 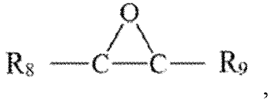 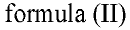
in which, R₈ and R₉ are each independently selected from the group consisting of H, C₁₋₁₀ alkyl, C₁₋₁₀ halogenated alkyl substituted with 1-10 halogen atoms;
S3: a halogenated alcohol having a general formula R₁₀OH, a second alcohol compound having a general formula R₁₁OH, and the second product are subjected to a third contact, to obtain the third product;
in the formula R₁₀OH, R₁₀ is selected from C₁₋₁₀ halogenated alkyl substituted with at least one halogen atom or C₆₋₂₀ halogenated aryl substituted with at least one halogen atom,
in the formula R₁₁OH, R₁₁ is a C₁₋₅ alkyl;
S4: the third product is subjected to spray drying, to obtain the magnesium-containing compound carrier.

12. The preparation method according to claim 11, **characterized in that**, with respect to 1 mol of magnesium halide, an amount of the first alcohol compound is 1-30 mol, and an amount of the ethylene oxide compound is 1-10 mol, an amount of the halogenated alcohol is 0.05-6.5 mol, and an amount of the second alcohol compound is 5-100 mol; preferably, with respect to 1 mol of magnesium halide, the amount of the first alcohol compound is 6-22 mol, the amount of the ethylene oxide compound is 2-6 mol, the amount of the halogenated alcohol is 1-5 mol, and the amount of the second alcohol compound is 8-80 mol; and more preferably, with respect to 1 mol of magnesium halide, an amount of the second alcohol compound is 31-50 mol.

13. The preparation method according to any one of claims 9 to 12, **characterized in that**, the magnesium-containing compound carrier has an average particle diameter of 2-100 microns, and a particle size distribution of less than 2; preferably, the magnesium-containing compound carrier has an average particle diameter of 2-19 microns, and a particle size distribution of 0.6-1.6; and more preferably, the magnesium-containing compound carrier has an average particle diameter of 2-10 microns, and a particle size distribution of 0.6-1.

14. A 3D printing raw material, **characterized in that**, the 3D printing raw material comprises the polypropylene microsphere according to any one of claims 1 to 7 and/or the polypropylene microsphere prepared by the preparation method according to any one of claims 8 to 13.

15. A use of the polypropylene microsphere according to any one of claims 1 to 7 and/or the polypropylene microsphere prepared by the preparation method according to any one of claims 8 to 13 in 3D printing, in particular in laser sintering printing, and most preferably in selective laser sintering.
